# EUROPEAN PATENT APPLICATION

(11) **EP 3 255 625 A1**
(43) Date of publication of application: **13.12.2017**
(21) Application number: 16880174.4
(22) Date of filing: 06.09.2016
(51) Int. Cl.: G09F 13/08, G09F 13/04, G09F 19/18

(54) **ADVERTISEMENT DISPLAY SYSTEM USING SMART FILM SCREEN**

(30) Priority: 06.04.2016 KR 20160042261
(71) Applicant: Dong Jin Company Co., Ltd., Yuseong-gu Daejeon 34127 (KR)
(72) Inventor: CHOI, Dong Jin, Daejeon 35212 (KR)
(74) Representative: Loo, Chi Ching
(86) International application number: PCT/KR2016/009947
(87) International publication number: WO 2017/175929

(57) **Abstract**

There is provided an advertising display system using a smart film screen of the present invention for increasing the awareness extents of customers about the displayed advertisements and maximizing the advertising effects by displaying advertising contents on the screen having a smart film attached thereon, which becomes opaque state when an image projector (100) operates and power is supplied on the smart film, and in normal time, the smart film-attached screen (200) becomes transparent state when power supply is turned off and plays as ordinary show window.

## Description

### [Technical Field]

The present invention relates to an advertising display system using a smart film screen, and more particularly, to an advertising display system using a smart film screen for displaying advertising images through the screen when an image projector starts to operate and power is supplied on to the smart film being changed to opaque state, while the screen playing as a normal show window when the power to the smart film is turned off and the smart film screen is in transparent state, thereby maximizing advertising effects with the advertising awareness extents by customers being increased.

### [Background Art]

Conventionally, one of the advertising methods and approaches was to put up the advertisement posters on transparent glass, but this method has a problem that the transparent glass is covered by the posters which block the scenes inside and outside. While inside and outside being viewed through the transparent glass before the advertisement posters put up, it could not be viewed from outside to inside and vise versa after posted.

Further, the advertisement effects was little because it was just to put up single still image of advertisement poster, and its appearance was not good enough and it could not give good impression to passers-by.

Therefore, there were demands for the technology to solve the above problems, and maximize advertising effects with awareness extents of the advertisements by customers highly increased.

### *example of prior art of technology*

Korean Patent Registration No. 10-0767709

### [Disclosure]

### [Technical Problem]

### [Technical Solution]

Therefore, the present invention is provided to solve the above problems.

Embodiments of the present invention provide an advertising display system using a smart film screen, in which when an image projector starts to operate and power is supplied on to the smart film and the smart film is changed to opaque state, advertising images are displayed on the screen, and normally, the screen is used as a show window when the power supply is turned off to the smart film and the smart film screen is changed to transparent state, thereby increasing the customer's awareness about advertisements and maximizing advertising effects.

In accordance with another aspect of the present invention, embodiments of the present invention provide an advertising display system using a smart film screen, in which a person, who wants to put out his or her advertisements and can be named as user herein, can provide the self-make advertisements images to the smart film-attached screen without necessity of requesting to advertisements makers, and the user can also manage and control the advertising scheduling for himself through mobile application or web service in real time, and ON-OFF operation of the display system of the present invention.

In accordance with another aspect of the present invention, embodiments of the present invention provide an advertising system for targeted marketing, in which the images of passers-by are captured by camera and analyzed, and the advertising contents are displayed on the screen based on the analyzed information data to completely suit and be well matched with the customers passing by the screen.

In order to solve the problems of prior arts and satisfy the objects of the present invention, there is provided an advertising display system using a smart film screen, which may include an image projector for sending advertising image signals; a screen having a smart film attached thereon, for showing advertisements provided from the image projector upon power supplied on thereto and the screen turned to opaque state, and for being in use as show window when power supply off and turned to transparent state; an advertising display control box for supplying the user's self-made advertising image data to the image projector according to the already-set advertising image schedules, and for controlling power ON/OFF to the image projector and the smart film according to the advertising scheduling; and a user advertising making device for providing an advertising editor to allow a user to self-make advertising images, supplying the finally-made advertising contents by the advertising editor to the advertising display control box, and scheduling the ON/OFF time of the image projector and the smart film and sending to the advertising display control box.

### [Advantageous Effects]

Therefore, the advertising display system using a smart film screen of the present invention provides the advantages of highly increasing the awareness extents of customers about the displayed advertisements and incredibly maximizing the advertising effects by displaying advertising contents on the smart film-attached screen, which becomes opaque state when the image projector operates and power is supplied on the smart film and whereas in normal time, the smart film-attached screen becomes transparent state when power supply is off, and plays as ordinary show window.

Furthermore, the advertising display system using a smart film screen of the present invention provides the advantages of allowing an advertising-wanting user to directly make his or her own advertising image contents and supply the self-made advertisements to the smart film-attached screen, thereby removing the needs of services from advertisement makers, and also provides the convenience that the user can manage the advertising scheduling himself in real time through mobile application or web service and perform ON/OFF time operation for the system.

### [Description of Drawings]

FIG. 1 is a diagram showing the entire configuration of an advertising display system using a smart film screen in accordance with an embodiment of the present invention.
FIG. 2 is a block diagram showing the advertising display control box of an advertising display system using a smart film screen in accordance with an embodiment of the present invention.
FIG. 3 is a block diagram showing the user advertising making device of an advertising display system using a smart film screen in accordance with an embodiment of the present invention.
FIG. 4 is a block diagram showing the targeted advertising requesting device of an advertising display system using a smart film screen in accordance with an embodiment of the present invention.
FIG. 5 is a diagram showing the entire configuration of an advertising display system using a smart film screen in accordance with an embodiment of the present invention.
FIG. 6 is an exemplary of the advertisement contents made by an advertising editing unit of an advertising display system using a smart film screen in accordance with an embodiment of the present invention.
FIG. 7 is a block diagram showing the advertising editing unit of an advertising display system using a smart film screen in accordance with an embodiment of the present invention.

### [Reference Numerals of Drawings]

- 100:: image projector
- 200:: smart film-attached screen
- 300:: advertising display control box
- 400:: user advertising making device
- 500:: camera part
- 600:: targeted advertising requesting device
- 700:: control device for projector advertising

### [Best Mode]

### [Mode for Invention]

### [Industrial Applicability]

### [Sequence List Text]

### [Detailed Description of the Embodiment of Invention]

Hereinafter, an advertising display system using a smart film screen of the present invention will now be described more fully with reference to the accompanying drawings, in which exemplary embodiments of the present invention are shown. The terms or contents should not be construed as limited to the normally used meanings or dictionary meanings set forth herein. Thus, it will be clearly understood by those skilled in the art that the inventor can properly define the meaning of the terms in the invention as best as it could be described, and thus, should be understood and interpreted as well as complying the principle and technical spirit of the invention.

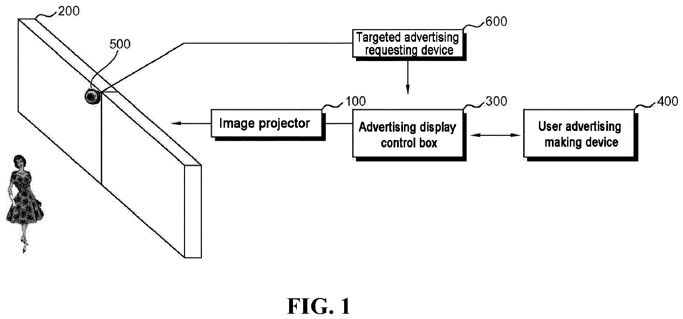

FIG. 1 is a diagram showing the entire configuration of an advertising display system using smart film screen in accordance with an embodiment of the present invention.

As shown in FIG. 1, the advertising display system using a smart film screen of the present invention is roughly composed of an image projector 100, a screen having a smart film attached thereon 200, an advertising display control box 300, and a user advertising making device 400.

The image projector 100 functions to receive advertising image signals and project the signals and may include, for example, a beam projector or smart projector and so on.

The screen 200 is characterized in that a smart film is attached thereon, and becomes opaque when power is supplied on, thereby showing the advertising contents provided from the image projector 100, and whereas becomes transparent when power supply turns off, thereby playing as a show window.

By the exposure of advertising contents as above, customers passing by while seeing the screen can recognize the advertisements displayed on the screen much better and more effectively so that the customer awareness extents about the displayed advertisements is highly increased, and the advertising effects can be maximized.

Briefly in the operation, when the image projector is turned on, advertising images are displayed, and when the power is supplied on the smart film, the screen having the smart film attached thereon is changed to opaque state and advertising images are displayed thereon. However, when the power is not supplied, the screen functions as a normal show window in transparent state.

That is, when the advertising display is started to play, the show window is turned to opaque state and the advertising contents are displayed on the screen.

At this, the advertising display control box 300 supplies the advertising image data which was made by users to the image projector according to the already-set advertising image schedules.

That is, a user can supply his or her self-made advertising image data in accordance with the user's self-set advertising image schedules.

Further, the control of power supply ON or OFF to the image projector and the smart film can be made in accordance with the already-set advertising image schedules for displaying the advertising images.

That is, once the advertisement 1 is scheduled to be played from 10:00 am to 12:00, it is set to emit power supply ON signal to the image projector and the smart film at 10:00 am.

Meanwhile, another specific feature of the present invention is that a user can directly supply his or her self-made advertising images.

In order to realize this, the user advertising making device 400 is provided. The user advertising making device 400 includes an advertising editing unit for a user to be able to make the advertising images for himself or herself, and thereby, provides the finally-made advertising image data, which was completed through the advertising editing unit, to the advertising display control box.

Further, the image display ON or OFF time signal for displaying advertising image data can be self-determined by a user.

That is, the operation ON or OFF time signal of the image projector and the smart film can be also set and can be supplied to the advertising display control box.

The advertising display system using a smart film screen according to second embodiment of the present invention may further include a camera part 500 being installed around the screen 200 having smart film attached thereon and taking photographs of the faces of the people passing by the screen and a targeted advertising requesting device 600 for identifying and analyzing the sex and the ages of passers-by based on the faces photographs from the camera part, and sending the analyzed sex and ages data to the advertising display control box 300.

In specific, the targeted advertising requesting device 600 may include a target analyzing unit 610 for analyzing the sex and the ages by using the faces images in the photographs taken by the camera part, an analysis data providing unit 620 for sending the analyzed sex and ages data to the advertising display control box 300, an advertising image allocating unit 630 for allocating the regions of the screen 200 to display advertisements images thereon in reference to the size of the smart film-attached screen 200, and the scenario advertising image processing unit 640 for calculating the walking pace of the passer-by from the moment of the camera part taking picture of his or her face and supplying the scenario advertising image data to the allocated regions by the advertising image allocating unit in accordance with the calculated walking pace.

At this point, the advertising display control box 300 is characterized to store the advertising image data corresponding to the sex and ages of customers and scenario advertising image data there inside.

The advertising display control box 300 is the control box specifically and exclusively characterized for displaying advertisements only.

At this point, the communication between the advertising display control box 300 and the image projector can be made by the way of short range wireless communication.

In specific, the advertising display control box 300 may include an advertising image data storage unit 310 for storing the advertising image data and advertising image schedule data provided from the user advertising making device, and a power signal processing unit 320 for emitting power-ON signal to the image projector and the smart film corresponding to advertising image display time in reference to the advertising image schedule data.

In specific, the user advertising making device 400 may include an advertising template storage unit 410 for storing advertising template images therein, an advertising editing unit 420 for acquiring the acquired advertising template images stored in the advertising template storage unit and supplying to the screen and editing the advertising template, and an edited advertising data supplying unit 430 for supplying the advertising template data edited by the advertising editing unit to the advertising display control box.

The camera part 500 may be installed near the screen 200 having smart film attached thereon and takes photographs of the faces of the people passing by the screen.

At this point, by using the targeted advertising requesting device 600, the sex and the ages of passers-by can be analyzed based on the faces photographs taken by the camera part, and the analyzed sex and ages data can be sent to the advertising display control box 300.

This is intended to analyze the sex and the ages of customers and perform the targeting advertisement.

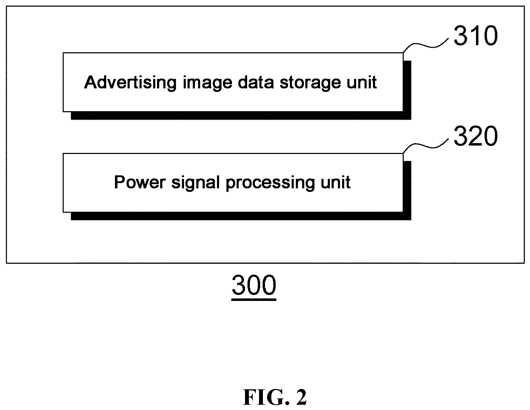

FIG. 2 is a block diagram showing the advertising display control box of an advertising display system using a smart film screen in accordance with an embodiment of the present invention.

As shown in FIG. 2, the advertising display control box 300 of the present invention may include an advertising image data storage unit 310 for storing advertising image data and advertising image schedule data provided from a user advertising making device, and a power signal processing unit 320 for emitting power ON signal to the image projector and the smart film corresponding to the advertising image display time in reference to the advertising image schedule data.

The power signal processing unit 320 functions to emit power ON signal to the image projector and the smart film upon the time corresponding to the advertising image display schedule after referring to the advertising image schedule data stored in the advertising image data storage unit 310.

The advertising display control box 300 may be combined together with the image projector, and thereby may be formed as USB for example and can be employed to be put into the port of the image projector, or may be provided as mobile applications applied to run on the smart phone.

Meanwhile, in order to perform targeting advertisements in accordance with additional aids or needs, the advertising display control box 300 may include the advertising image data and the scenario advertising image data customized according to the sex and the ages of customers.

That is, once the sex and the ages are estimated and analyzed, corresponding data is acquired and the advertisement data corresponding to this acquired data is extracted and displayed.

At this point, the communication between the advertising display control box 300 and the image projector is made by the way of short range wireless communication.

Preferably, the Wi-Fi communication way may be used.

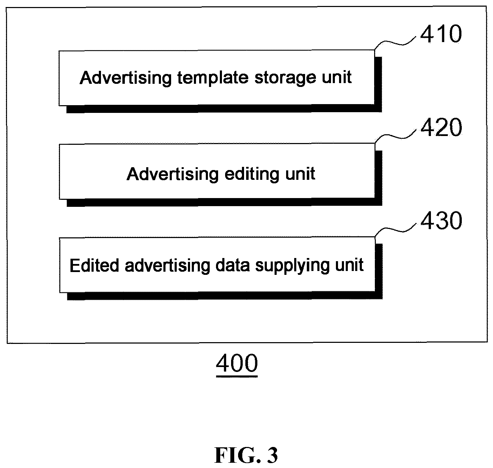

FIG. 3 is a block diagram showing the user advertising making device of an advertising display system using a smart film screen in accordance with an embodiment of the present invention.

As shown in FIG. 3, the user advertising making device 400 may include an advertising template storage unit 410, an advertising editing unit 420, and an edited advertising data supplying unit 430.

The advertising template storage unit 410 may store advertising template images therein, and specifically, receives the advertising template images from the advertising template providing companies in real time, and stores the information therein.

The advertising editing unit 420 acquires the advertising template images stored in the advertising template storage unit and supplies the acquired advertising template images to the screen of a user's access terminal, and performs editing of the advertising template images.

For example, when a user selects the templates that he wants, and displays the image on his terminal screen, he can perform brief editing such as text, image order, effect and so on.

Then, the edited advertising data supplying unit 430 finally acquires the advertising template data which was edited by the advertising editing unit 420 and supplies it to the advertising display control box.

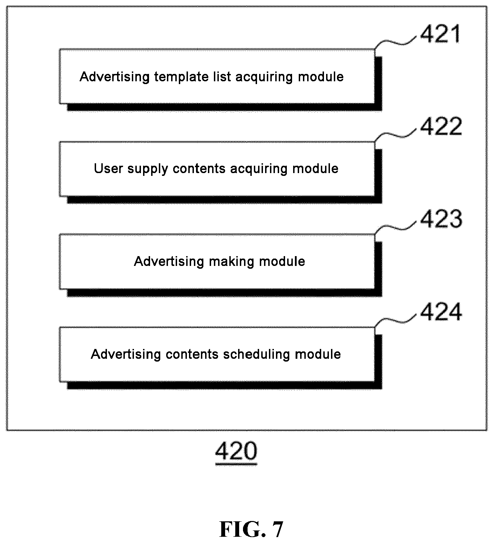

As shown in FIG. 7, the advertising editing unit 420 may include an advertising template list acquiring module 421 for acquiring the advertising template list data stored in the advertising template storage unit; a user supply contents acquiring module 422 for acquiring the photographs or moving pictures data from the smart phone of a user; an advertising making module 423 for making advertising contents to be displayed by showing on the screen the advertising template list data acquired from the advertising template list acquiring module, extracting the advertising template selected by a user and displaying on the screen, and matching the photographs or moving pictures acquired by the user supply contents acquiring module to the selected layout; and an advertising contents scheduling module 424 for setting the schedules of the made advertising contents as above.

The advertising template list acquiring module 421 acquires the advertising template list data stored in the advertising template storage unit 410, and supplies the template list data to the smart phone of a user. When a user selects a specific template by using a computer terminal or his smart phone, etc., the selected template data is acquired.

That is, once a specific template list data is acquired through various types of terminals capable of web accessing, editing is also possible through the terminal being in use.

Meantime, in the case of using a smart phone in accordance with one preferred embodiment of the present invention, when the user supply contents acquiring module 422 acquires the self-taken photographs or moving images made by the user's smart phone, the advertising making module 423 matches the photographs or moving images acquired by the user supply contents acquiring module to the predetermined lay out, and makes the contents to be advertised.

At this point, a computer terminal may be also used instead of the smart phone, and thereby, the user can match the photographs or moving images provided from the smart phone to the predetermined lay out of the user's selecting templates on the computer terminal.

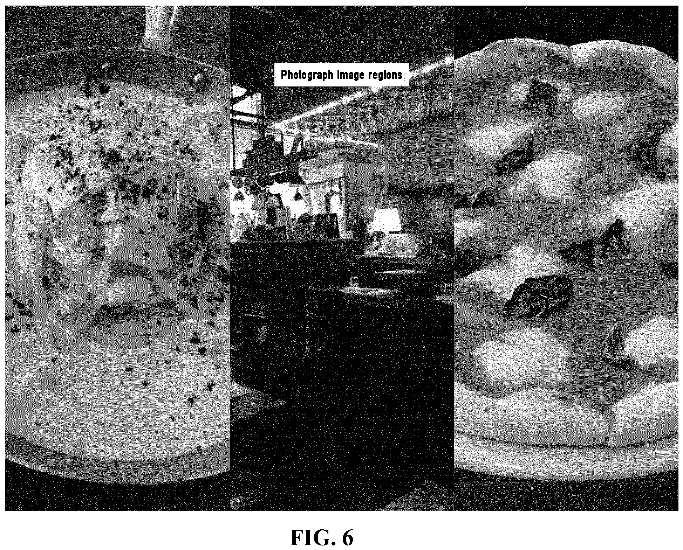

That is, as shown in FIG. 6, the images self-taken by a user can be matched to the predetermined lay out of the template.

At this point, the advertising contents scheduling module 424 can set the schedule of advertising contents made as above.

For example, the schedule information being set to display the advertisements during weekdays from 9:00 am to 11:00 am may be supplied to the advertising display control box 300.

Briefly describing the advertising contents making process, a user takes photographs or moving images for himself by using the mobile application downloaded and run inside his smart phone.

Then, the photographs or moving images in his mobile is automatically uploaded into the advertising editing unit, and one among various templates can be selected and used as it is, or additionally, his self-taken photographs or moving images can be inserted.

Then, the text inside the template can be modified, but the text modification technology of the template is already-known technology and so, detailed description thereof will be omitted.

Various desired templates such as images or moving images templates can be made.

Then, after the templates order and display time are set and most wanted advertisements making is completed, it can be finally stored.

Then, when the display schedule is determined, the user, that is, advertisement owner can complete the advertisement contents making.

Then, the advertising contents stored in the advertising editing unit is automatically uploaded to the advertising display control box, and the advertising contents are displayed by the control of the advertising display control box according to the determined schedules.

As structured above, anybody can make advertising contents images conveniently without help from or request to the professional advertisement maker and use his self-made advertising contents to the places or areas for advertisement, thereby incredibly decreasing the expenses for the advertisement images make and production. Further, he can make the advertising contents which well suit to his business and products and his advertising strategy and preference and then, he can connect the advertising results to his business much better, thereby maximizing the advertising effects.

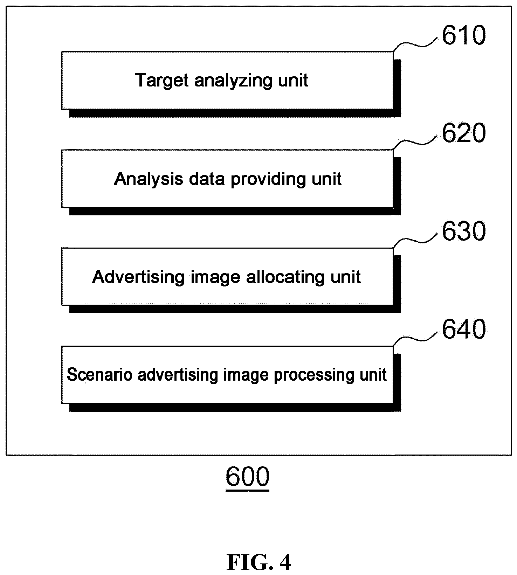

FIG. 4 is a block diagram showing a targeted advertising requesting device of the advertising display system using a smart film screen in accordance with an embodiment of the present invention.

As shown in FIG. 4, the targeted advertising requesting device 600 may include a target analyzing unit 610, an analysis data providing unit 620, an advertising image allocating unit 630, and a scenario advertising image processing unit 640.

The target analyzing unit 610 may identify and estimate the sex and the ages of passers-by based on the faces of the photographs taken from the camera part.

The analysis data providing unit 620 may send the analyzed sex and ages data to the advertising display control box 300.

Finally, an advertising data extracting unit may be further included in order to extract the corresponding advertising data among the advertising images list stored in the advertising display control box which is well matched with the sex and ages information data analyzed as above.

In case of failing to extract corresponding advertising images well matched with the analyzed sex and ages data, the advertising data extracting unit may supply the analyzed sex and ages information data to the user advertising making device, and an advertising image requesting unit may be further included in the advertising display control box in order to acquire the corresponding advertising images data from the user advertising making device.

Further, the user advertising making device stores the information of the advertising cooperation terminals being in cooperation for advertising, and with the analyzed sex and ages information data being supplied to the plurality of advertising cooperation terminals, advertising expense statements can be also supplied to the advertising cooperation terminals.

Meanwhile, the advertising image allocating unit 630 functions to allocate the regions of the screen 200 through which advertising images will be displayed in reference to the size of the screen having the smart film attached thereon.

For example, in the case of 9 meters across the horizontal side, the regions can be allocated by unit of 3 meters.

The scenario advertising image processing unit 640 functions to calculate the walking pace of the passer-by from the time that his face photograph is taken by the camera part.

Then, the scenario advertising image processing unit 640 supplies scenario advertising image data to the allocated regions of the screen by the advertising image allocating unit 630 in accordance with the calculated walking pace.

For example, an advertisement A is displayed on a first region, and an advertisement B is then displayed on a second region when a person reaches the beginning of the second region at which the first region is ended, and an advertisement C is then displayed on a third region when he or she reaches the beginning of the third region at which the second region is ended.

Therefore, the possibility and the awareness extents that customers can recognize and remember the contents of the advertisements being displayed can be highly increased.

Meantime, depending on the additional needs or characteristics, the targeted advertising requesting device 600 may further include a social group classify unit for analyzing the clothes look that a passer-by wears and classifying the social group where he or she belongs, and a social group targeted advertising data extracting unit for extracting the advertising data corresponding to the analyzed social group as above.

That is, if analyzing the data such as the clothes colors of passers-by passing by besides their clothes shapes in real time, the sensitiveness of the passers-by about fashion or seasons can be estimated, and based on the analysis, it can be classified whether they belong to the groups of such as innovative consumer, early adopter, early majority, late majority, late adopter or not.

For example, it can surely be estimated as the consumers with high education level, high income level, and active participation of social activities in the group of innovative consumer provided from the analyzed data as above, and new products or any high-priced products must be completely acceptable to such consumers. Therefore, marketing strategies targeting these customers and well suiting their preference should be followed by using these analysis data.

Thereby, the advertising information and images from the data corresponding to this innovative consumer must be extracted and supplied as targeting advertisements in real time.

Meantime, in another additional aspect, the targeted advertising requesting device 600 may further include a passer-by identifying unit which is used for the purpose of identifying the appearance of the passers-by and analyzing whether he or she is a resident living around the town area.

In specific, the passer-by identifying unit may perform the identifying of the face and appearance of a passer-by, and compare with the face identification data stored in memory (not shown) in the past. If determined to match with the face data stored in the past, it is in high possibility that he or she must be a resident in the area.

So, in the analysis that the passer-by is the resident of the town area, the advertisements contents received and entrusted from the businesses and companies in the town should be extracted and displayed in real time well suited as targeting advertising.

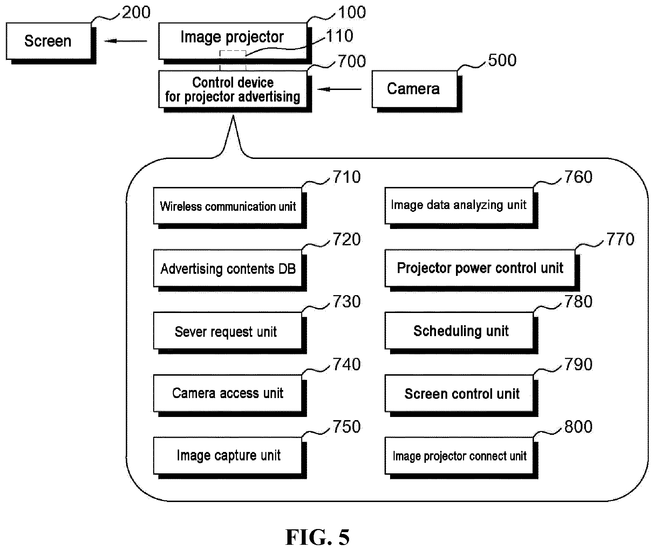

FIG. 5 is a diagram showing the entire configuration of an advertising display system using a smart film screen in accordance with another embodiment of the present invention.

As shown in FIG. 5, the advertising display system in accordance with another embodiment of the present invention may include an image projector 100 for projecting images; a communication port 110 installed at one side of the image projector; a control device for projector advertising only 700; and a camera part 500 for supplying images to the control device for projector advertising only, and collecting the images of passers-by; and a screen 200 for displaying the images from the image projector.

The configuration as above shows one exemplary embodiment of providing advertising images easily and conveniently by using a portable control device only for projector advertising such as the control device for projector advertising only 700 as above.

For this purpose, the control device for projector advertising only 700 may include: a wireless communication unit 710 for communicating with a wireless router through a Wi-Fi communication; an advertising contents DB 720 for storing advertising contents; a sever request unit 730 for requesting to the sever for advertising contents downloading; a camera access unit 740 for acquiring outdoor images; an image capture unit 750 for capturing the images of passers-by; an image data analyzing unit 760 for collecting the captured images and analyzing the image data; a projector power control unit 770 for turning ON or OFF of the image projector; a scheduling unit 780 for storing the ON or OFF schedules of the image projector; a screen control unit 790 for controlling the screen display changes to send the advertising contents to the image projector; and an image projector connect unit 795 being connected to the image projector.

In specific, the control device for projector advertising only 700 can be connected with the image projector through the image projector connect unit 795.

The wireless communication unit 710 functions to communicate with a wireless router by the way of Wi-Fi communication, thereby being connected and requesting to the sever for the advertising contents.

For this, the advertising contents DB 720 keeps advertising contents there inside, and the advertising contents are requested by the sever request unit 730.

Further, the camera access unit 740 functions to acquire the images taken from the camera, and the image capture unit 750 acts to capture the images of passers-by.

Thereby, the captured images can be analyzed by the image data analyzing unit 760.

Also, the projector power control unit 770 acts to control ON or OFF signal of the image projector and thus, may send an ON signal upon passer-by image captured, or may send an ON signal in accordance with the ON/OFF signal schedules.

In addition to this purpose, the scheduling unit 780 stores the ON/OFF schedules of the image projector.

Further, the screen control unit 790 functions to control the screen display changes to send the advertising contents to the image projector, and thus, after the display of advertisement A is finished and at the time to be changed to advertisement B in accordance with the schedules, the displayed screen image can be changed by the operation of the screen control unit 790.

Furthermore, it can also perform the function of changing advertisements in accordance with the analyzed information about passers-by.

Therefore, according to the advertising display system using a smart film screen of the present invention, advertising images can be displayed on the screen upon the image projector operating and power supplied to the smart film of the screen and the smart film being changed to an opaque state, and whereas in usual time, the smart film becomes transparent and the screen can act as a normal show window, thereby the awareness extents of customers about the displayed advertising contents is increased and the advertising effect is maximized, which surely be also applied very usefully in advertising and displaying fields.

It should be understood that although a few embodiments have been described as above, those skilled in the art will readily appreciate that many modifications are possible without materially departing from the novel teachings and advantages. Therefore, the foregoing is illustrative of embodiments and is not to be construed as limiting thereof.

Accordingly, all such modifications are intended to be included within the scope of this present invention as defined in the claims. In the claims, means-plus-function clauses are intended to cover the structures described herein as performing the recited function, and not only structural equivalents but also equivalent structures.

## Claims

1. An advertising display system using a smart film screen, comprising:
an image projector (100) for processing advertising image signals;
a screen (200) having a smart film attached thereon, for showing advertisements provided from the image projector upon power supplied on thereto and the screen turned to opaque state, and for being in use as show window when power supply off and turned to transparent state;
an advertising display control box (300) having an advertising image data storage unit (310) and a power signal processing unit (320), in which the advertising image data storage unit (310) stores advertising image data and advertising image schedule data provided from a user advertising making device, and the power signal processing unit (320) emits power-on signal to the image projector and the smart film corresponding to advertising image display time in reference to the advertising image schedule data;
a user advertising making device (400) for setting up the operation ON or OFF time of the image projector and the smart film and sending to the advertising display control box, and having an advertising template storage unit (410), an advertising editing unit (420), and an edited advertising data supplying unit (430), in which the advertising template storage unit (410) stores advertising template images therein, the advertising editing unit (420) acquires and supplies to a screen the acquired advertising template images from the advertising template storage unit, and edits the advertising template, and the edited advertising data supplying unit (430) supplies the advertising template data edited by the advertising editing unit to the advertising display control box;
a camera part (500) for taking photographs of the faces of people passing by the screen (200) and installed near the smart film-attached screen (200) for the photographs;
a targeted advertising requesting device (600) having a target analyzing unit (610), an analysis data providing unit (620), an advertising image allocating unit (630), a scenario advertising image processing unit (640), a social group classify unit, and a social group targeted advertising data extracting unit, in which the target analyzing unit (610) identifies and analyzes the sex and the ages of passers-by based on the faces photographs from the camera part, the analysis data providing unit (620) sends the analyzed sex and ages data to the advertising display control box (300), the advertising image allocating unit (630) allocates the regions of the smart film-attached screen (200) to display advertisements images thereon in reference to the size of the screen (200), the scenario advertising image processing unit (640) calculates the walking pace of the passer-by from the moment of the camera part taking picture of his or her face and supplies scenario advertising image data to the allocated regions by the advertising image allocating unit in accordance with the calculated walking pace, the social group classify unit analyzes the clothes look that a passer-by wears and classifies the social group where he or she belongs, and the social group targeted advertising data extracting unit extracts the advertising data corresponding to the analyzed social group,
wherein the advertising editing unit (420) comprises:
an advertising template list acquiring module (421) for acquiring the advertising template list data stored in the advertising template storage unit;
a user supply contents acquiring module (422) for acquiring the photographs or moving pictures data from the smart phone of a user;
an advertising making module (423) for making advertising contents to be displayed by making the advertising template list data acquired from the advertising template list acquiring module shown on the screen, extracting the advertising template selected by a user and displaying on the screen, and matching the photographs or moving pictures acquired by the user supply contents acquiring module to the selected layout; and
an advertising contents scheduling module (424) for setting the schedules of the advertising contents made as above.
